# EUROPÄISCHE PATENTSCHRIFT

(11) **EP 3 286 616 B1**
(45) Veröffentlichungstag und Bekanntmachung des Hinweises auf die Patenterteilung: **26.12.2018**
(21) Anmeldenummer: 16719771.4
(22) Anmeldetag: 25.04.2016
(51) Int. Cl.: H02N 2/12

(54) **STELLMOTOR**
SERVOMOTOR
SERVOMOTEUR

(30) Priorität: 24.04.2015 DE 102015005294; 30.04.2015 DE 102015005512
(43) Veröffentlichungstag der Anmeldung: 28.02.2018
(73) Patentinhaber: Physik Instrumente (PI) GmbH & Co. KG, 76228 Karlsruhe (DE)
(72) Erfinder: MARTH, Harry, 76337 Waldbronn (DE); STARK, Wolfram, 75196 Remchingen (DE)
(74) Vertreter: Schatt, Markus F.
(86) Internationale Anmeldenummer: PCT/EP2016/000655
(87) Internationale Veröffentlichungsnummer: WO 2016/169658

(56) Entgegenhaltungen:
- EP-A1- 0 040 580
- EP-A2- 2 398 082
- DE-A1- 3 625 636
- DE-A1-102012 223 398
- KR-A- 20090 132 966

## Beschreibung

Die Erfindung betrifft einen Stellmotor.

Aus der DE 3625636 A1 ist ein Messtaster mit einer magnetischen Kompensation von Federe-Rückstellkräften bekannt.

Die DE 10 2012 223 398 A1 und die US 2011/0109197 A1 beschreiben jeweils einen Stellmotor mit einem drehbar auf einem Basisköper angeordneten Stellkörper, einer Antriebsvorrichtung zum Bewegen des Stellkörpers auf dem Basisköper und eine Rückstell-Anordnung, die den Stellkörper und den Basisköper miteinander koppelt und zwischen diesen eine Rückstellkraft ausübt, die der Stellbewegung des Stellkörpers entgegen wirkt.

In der KR 2009 0132966 A ist eine Haltevorrichtung und ein Stellmotor zur Herstellung von Halbleiter-Produkten beschrieben.

Die EP 0 040 580 A1 beschreibt eine Vorrichtung zum Ausfluchten eines Teile und eines Substrats zur Aufnahme des Teils. Die Vorrichtung weist einen gleitbeweglich auf einem Plateau versetzbaren Tisch auf.

Eine Vibrations-Antriebsvorrichtung ist aus der EP 2 398 082 A2 bekannt.

Aufgabe der vorliegenden Erfindung ist, einen Stellmotor bereitzustellen, mit dem eine präzise Stellbewegung eines Stellteils bei einem günstigen dynamischen Verhalten bei Ausführung der Stellbewegung realisierbar ist.

Diese Aufgabe wird mit den Merkmalen der unabhängigen Ansprüche gelöst. Weitere Ausführungsformen sind in den auf diese jeweils rückbezogenen Unteransprüchen angegeben. Nach der Erfindung ist ein Stellmotor vorgesehen, der aufweist:
- einen Basiskörper,
- einen an dem Basisköper angeordneten Stellkörper,
- Antriebs-Anordnung mit zumindest einer Antriebsvorrichtung, die mit einem Antriebsabschnitt des Stellkörpers gekoppelt ist und aufgrund dieser Kopplung bei

Aktivierung der Antriebs-Anordnung eine Bewegung des Antriebsabschnitts des Stellkörpers in einer von zwei zueinander entgegen gesetzt gerichteten Umfangsrichtungen bewirkt,
- eine Drehführung, mit der der Stellkörper drehbar an dem Basisköper geführt ist und durch die die Bewegung des Antriebsabschnitts des Stellkörpers in eine Drehbewegung des Stellkörpers umgesetzt wird,
- eine Rückstell-Anordnung, die den Stellkörper und den Basisköper miteinander koppelt und zwischen diesen eine Rückstellkraft ausübt, die der Stellbewegung des Stellkörpers entgegen wirkt,
- eine Magnet-Kompensationsvorrichtung, die die von der Rückstell-Anordnung ausgeübte Rückstellkraftreduziert oder aufhebt.

Dabei kann bei dem Stellmotor insbesondere die Drehführung durch die Rückstell-Anordnung gebildet sein. Dadurch, dass die Rückstell-Anordnung gleichzeitig als Drehführung fungiert und somit eine Funktionsintegration realisiert ist, kann die Anzahl der Elemente des Stellmotors reduziert und dieser damit kompakter ausgeführt werden.

Nach einer Ausführungsform des Stellmotors ist vorgesehen, dass die Rückstell-Anordnung aus zwei Rückstell-Vorrichtung gebildet ist, wobei jeweils eine Rückstell-Vorrichtung an den in einer Umfangsrichtung des Stellkörpers entgegen gesetzt zueinander gelegenen Seiten einer Antriebsvorrichtung gelegen sind.

Nach einer Ausführungsform des Stellmotors ist vorgesehen, dass die Rückstell-Vorrichtungen als Schenkelfeder-Anordnung ausgeführt sind, die zwei seitliche Federteile und einen sich zwischen diesen erstreckenden mittleren Stützabschnitt mit einer leistenförmigen Befestigungsbasis aufweisen, von dem die seitlichen Federteile und der mittlere Stützabschnitt jeweils mit einem ersten Ende ausgehen und wobei ein jeweils zweites Ende des mittleren Stützabschnitts mit dem Basiskörper und den beiden seitlichen Federteilen mit in einer Umfangsrichtung des Stellkörpers seitlich des mittleren Stützabschnitts gelegenen Verbindungsvorrichtungen des Stellkörpers befestigt sind.

Nach einer Ausführungsform des Stellmotors ist vorgesehen, dass die zumindest eine Antriebsvorrichtung aus einem Aktuatorkörper aus einem piezoelektrischen oder elektrostriktiven Material mit Betätigungselektroden gebildet ist.

Bei dieser Ausführungsform des Stellmotors kann die zumindest eine Antriebsvorrichtung durch einen Schreitantrieb gebildet sein. Bei einem Schreitantrieb ergibt sich insgesamt eine kontinuierliche und makroskopische Bewegung des Stellkörpers als des anzutreibenden Elements aus kleinen, in der Regel mikroskopischen Schreitbewegungen der zum Antrieb des anzutreibenden Elements dienenden Antriebselemente der Antriebsvorrichtung, wobei besagte Antriebselemente in abwechselnder und sich wiederholender Weise mit dem anzutreibenden Element in Eingriff gelangen.

Alternativ dazu kann bei dieser Ausführungsform des Stellmotors die zumindest eine Antriebsvorrichtung durch einen Ultraschallantrieb gebildet sein.

Nach einer Ausführungsform des Stellmotors ist vorgesehen, dass an dem zumindest einen Antriebsabschnitt eine Linearführung angeordnet ist, mit der die an dem jeweiligen Antriebsabschnitt gelegene Antriebsvorrichtung den Antriebsabschnitt linear bewegt.

Nach einer Ausführungsform des Stellmotors weist die Magnet-Kompensationsvorrichtung zumindest einen Permanentmagneten auf. Die Verwendung eines Permanentmagneten ist vergleichsweise einfach und kostengünstig zu realisieren.

Nach einer Ausführungsform des Stellmotors kann vorgesehen sein:
- dass die Antriebs-Anordnung drei Antriebsvorrichtungen aufweist,
- dass quer zur Betätigungsrichtung der Aktuatorvorrichtung gesehen an entgegen gesetzt zueinander gelegenen Seiten jeweils eine Rückstell-Vorrichtung angeordnet ist, wobei jede der Rückstell-Vorrichtungen den Stellkörper und den Basisköper derart koppelt, dass, in Bezug auf die Umfangsrichtung, bei Auseinanderbewegen von Stellkörper und Basisköper auf einer Seite der jeweiligen Aktuatorvorrichtung die dort angeordnete Rückstell-Vorrichtungen eine Kraft ausübt, die das Auseinanderbewegen rückzustellen versucht.

Bei dieser Ausführungsform des Stellmotors können die drei Antriebsvorrichtungen gleichmäßig über den Umfang des Stellmotors verteilt sein.

Der Ausdruck "entlang" kann hierin im Zusammenhang mit den hierin genannten Richtungsangaben, die den Verlauf einer Konturlinie oder einer Oberfläche betreffen können, oder die eine Richtung einer mechanischen Komponente wie einer Achse oder Welle betreffen können, insbesondere bedeuten, dass die Tangente an die jeweilige Konturlinie oder an die jeweilige Oberfläche in deren Verlauf gemäß der Richtungsangabe bzw. die Längserstreckung und z.B. Mittelachse der mechanischen Komponente lokal mit einem Winkel von maximal 45 Grad und vorzugsweise von maximal 30 Grad von einer Bezugsrichtung oder Bezugsachse abweicht auf die bzw. der die jeweilige Richtungsangabe bezogen ist.

Der Ausdruck "quer" kann hierin im Zusammenhang mit den hierin genannten Richtungsangaben, die den Verlauf einer Konturlinie oder einer Oberfläche betreffen können, oder die eine Richtung einer mechanischen Komponente wie einer Achse oder Welle betreffen können, insbesondere bedeuten, dass die Tangente an die jeweilige Konturlinie oder an die jeweilige Oberfläche in deren Verlauf gemäß der Richtungsangabe bzw. die Längserstreckung und z.B. Mittelachse der mechanischen Komponente lokal mit einem Winkel von minimal 45 Grad und vorzugsweise von minimal 30 Grad von einer Bezugsrichtung oder Bezugsachse abweicht, auf die bzw. der die jeweilige Richtungsangabe bezogen ist.

Unter dem Begriff "Abstand" insbesondere zwischen zwei Flächen wird hierin insbesondere der kürzeste Abstand verstanden.

Unter einem "kontinuierlichen Verlauf" einer Oberfläche ist gemeint, dass die Oberfläche entlang einer Referenzrichtung gesehen über die gesamte quer zur Referenzrichtung verlaufende Breite keine Ecke aufweist, d.h. differenzierbaren Verlauf hat.

Unter "Projektion" eines Merkmals auf ein anderes Merkmal wird hierin insbesondere eine Projektion in der Z-Richtung verstanden.

Unter einer Gerichtetheit einer Oberfläche z.B. durch einen Ausdruck, nach dem eine Oberfläche in eine jeweils angegebene Richtung weist, bedeutet hierin insbesondere, dass der Normalenvektor zumindest eines Abschnitts dieser Oberfläche in die jeweils angegebene Richtung weist.

Die "Längsrichtung" einer strukturellen Komponente und insbesondere einer Führungsbahn ergibt sich als Verbindungslinie der Flächenschwerpunkte der jeweils kleinsten Querschnittsflächen. Da die strukturellen Komponente und insbesondere einer Führungsbahn geradlinig oder zumindest abschnittsweise gekrümmt verlaufen kann, ist die Längsrichtung generell als lokale Längsrichtung zu verstehen.

Im Folgenden werden Ausführungsformen der Erfindung an Hand der beiliegenden Figuren beschrieben, die zeigen:
- Figur 1 eine perspektivische Darstellung einer Ausführungsform des erfindungsgemäßen Stellmotors in einem neutralen Antriebszustand,
- Figur 2 eine Darstellung einer Draufsicht der Ausführungsform des erfindungsgemäßen Stellmotors nach der Figur 1 auf eine Ebene, die als gestrichelte Linie L2-L2 in der Figur 1 eingetragen ist,
- Figur 3 eine Draufsicht auf die Ausführungsform des Stellmotors nach der Figur 1,
- Figur 4 eine schematische vergrößerte Darstellung eines in der Figur 2 eingetragenen Ausschnitts D4 der Ausführungsform des Stellmotors nach der Figur 1,
- Figur 5 eine perspektivische vergrößerte Darstellung eines Ausschnitts der Ausführungsform des Stellmotors nach der Figur 1, der als Ausschnitt D4 in der Figur 2 eingetragen ist und der sich aufgrund der in der Figur 1 eingetragenen Blickrichtung ergibt,
- Figur 6 eine perspektivische Darstellung eines durch die Linie L6-L6 der Figur 4 bezeichneten Ausschnitts der Ausführungsform des Stellmotors nach der Figur 1,
- Figur 7 eine perspektivische Darstellung einer Schenkelfeder-Anordnung, die als Rückstell-Vorrichtung bei der Ausführungsform des Stellmotors nach den Figuren 2 bis 7 verwendet wird,
- Figur 8 eine Darstellung des Zusammenwirkens der Kräfte einer Rückstellvorrichtung und einer dieser zugeordneten Magnet-Kompensationsvorrichtung,
- Figur 9 eine Darstellung einer Ausführungsform des Stellmotors als Alternative zu der Ausführungsform des Stellmotors nach der Figur 1 in der Darstellungsweise der Figur 2,
- Figur 10 eine Darstellung einer weiteren Ausführungsform des erfindungsgemäßen Stellmotors, wobei die Darstellung wie die Darstellung der Figur 2 definiert ist,
- Figur 11 eine Darstellung einer weiteren Ausführungsform des erfindungsgemäßen Stellmotors, wobei die Darstellung wie die Darstellung der Figur 2 definiert ist,
- Figur 12 eine Darstellung einer weiteren Ausführungsform des erfindungsgemäßen Stellmotors, wobei die Darstellung wie die Darstellung der Figur 2 definiert ist,
- Figur 13 eine vergrößerte Darstellung eines in der Figur 12 eingetragenen Ausschnitts D13,
- Figur 14 eine Darstellung einer weiteren Ausführungsform des erfindungsgemäßen Stellmotors, wobei die Darstellung wie die Darstellung der Figur 2 definiert ist.

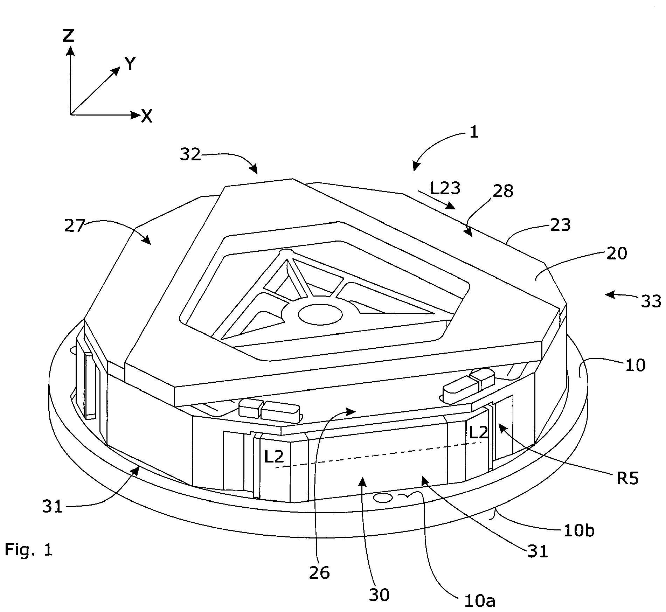

Der erfindungsgemäße Stellmotor 1 weist einen Basiskörper 10 und einen an diesem um einen Drehpunkt M drehbar angeordneten Stellkörper 20, der sich um einen Mittelpunkt M des Stellmotors 1 dreht. Der Basiskörper 10 kann wie bei der Ausführungsform der Figur 1 als kreisrunde Platte realisiert sein. Der Basiskörper 10 weist eine dem Stellkörper 20 zugewandte erste Oberfläche 10a und eine entgegen gesetzt zu dieser gelegene zweite Oberfläche 10b auf. Dem Stellmotor 1 kann ein Koordinatensystem mit den Koordinatensachsen x, y, z zugeordnet werden, wobei die z-Achse senkrecht auf der ersten Oberfläche 10a des Basiskörpers 10 steht. Der Drehpunkt M definiert eine von diesem ausgehende radiale Richtung.

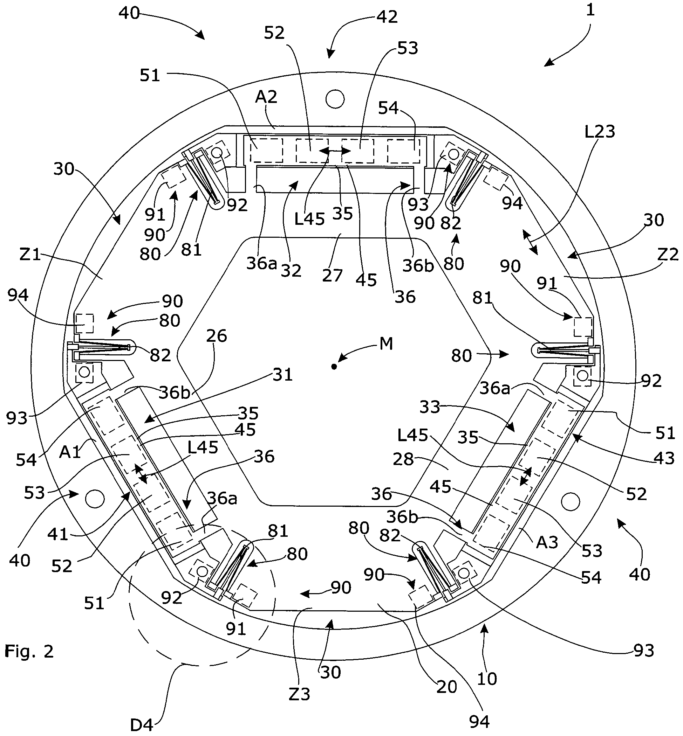

Der Stellkörper 20 kann ein Hauptteil 21 aufweisen oder aus diesem bestehen, der im Wesentlichen plattenförmig oder plattenförmig gestaltet sein kann. Der Stellkörper 20 oder das Hauptteil 21 weist eine Oberseite 21a und ein Unterseite 21b auf, die dem Basiskörper 10 zugewandt gelegen ist. Das Hauptteil 21 kann für denjenigen Bereich desselben definiert sein, in dem sich die Unterseite 21b entlang der erste Oberfläche 10a des Basiskörper 10 erstreckt. Der Stellkörper 20 weist einen Umfangsrand 23 auf, der durch Projektion des Stellkörpers 20 auf den oder in Richtung zum Basiskörper 10 definiert ist. Der Umfangsrand 23 definiert eine jeweils lokale Umfangsrichtung L23, die sich als Tangente an einen jeweiligen Punkt des Umfangsrand 23 mit einer Richtung in oder entgegen dem Uhrzeigersinn bei einer Draufsicht gemäß Figur 2 ergibt. Der Stellmotor 1 kann ausgeführt sein, dass sich der Stellkörper 20 hinsichtlich der sich aus der Draufsicht gemäß Figur 2 ergebenden Umfangsrichtung L23 im Uhrzeigersinn oder entgegen dem Uhrzeigersinn oder in beiden dieser Richtungen bewegt werden kann.

Zwischen dem Basiskörper 10 und dem Stellkörper 20 ist eine Antriebs-Anordnung 40 mit zumindest einer Antriebsvorrichtung angeordnet. Die Antriebs-Anordnung 40 oder die zumindest eine Antriebsvorrichtung kann insbesondere am Basiskörper 10 und insbesondere an der ersten Oberfläche 10a desselben angeordnet oder befestigt sein. Die zumindest eine Antriebsvorrichtung 41 ist mit jeweils einem Antriebsabschnitt des Stellkörpers 20 oder mit einer Kopplungsvorrichtung des Stellkörpers 20 gekoppelt, der an einem Antriebsabschnitt des Stellkörpers 20 gelegen ist. Bei der Ausführungsform des Stellmotors 1 nach der Figur 1 ist der Antriebsabschnitt ein in Bezug auf die vom Drehpunkt M ausgehenden radialen Richtung ein äußerer Abschnitt des Stellkörpers 20 bzw. des Hauptteils 21. Mit dem Begriff "äußerer Abschnitt" ist hierin vorzugsweise ein Abschnitt bezeichnet, der von dem Mittelpunkt M aus gesehen in der radial gesehen äußeren Hälfte des Stellkörpers 20 gelegen ist.

Bei den hierin beschriebenen Ausführungsformen des Stellmotors 1 kann auch vorgesehen sein, dass der Stellkörper 20 aus einem plattenförmigen Hauptteil 21 gebildet ist, der den zumindest einen äußeren Abschnitt aufweist. Insbesondere kann, wie es auch in der Figur 23 dargestellt ist, der äußere Abschnitt des Stellkörpers 20 ein Randabschnitt des Stellkörpers 20 oder des Hauptteils 21 des Stellkörpers 20 sein, der von dem Umfangsrand 23 begrenzt wird. Die Ausführungsform des Stellmotors 1 nach der Figur 1 weist drei Kopplungsvorrichtungen 31, 32, 33 auf, die über den Umfang des Stellkörpers 20 verteilt angeordnet sind. Jede der Kopplungsvorrichtungen 31, 32, 33 weist ein balkenförmiges Kopplungsteil 35 auf, das über eine Befestigungsvorrichtung 36 z.B. in Form von zwei Befestigungsstützen 36a, 36b an dem Hauptteil 21 des Stellkörpers 20 befestigt ist.

Dementsprechend weist die Ausführungsform des Stellmotors 1 nach der Figur 1 eine Antriebs-Anordnung 40 mit drei Antriebsvorrichtungen 41, 42,43 auf, die über den Umfang des Basiskörpers 10 entlang einer Umfangsrichtung L23 und somit über den Umfang des Stellkörpers 20 verteilt angeordnet sind und sich in einer Längsrichtung L45 erstrecken. Jede der Antriebsvorrichtungen 41, 42, 43 wirkt mechanisch mit jeweils einer Kopplungsvorrichtung 31, 32, 33 zusammen, um diese und somit den Stellkörper 20 in zumindest einer der zwei Bewegungsrichtungen L23 relativ zum Basiskörper 10 zu bewegen. Generell wirkt zumindest eine Antriebsvorrichtung mechanisch mit einer Kopplungsvorrichtung 31, 32, 33 zusammen. Jede der zumindest einen Antriebsvorrichtung 41 und insbesondere zumindest ein Antriebsteil derselben bewegt sich bei Aktivierung derselben aufgrund eines Bewegungskommandos derart entlang der Längsrichtung L45, dass die Antriebsvorrichtung 41 oder das zumindest eine Antriebsteil derselben einen Antriebsabschnitt, der mit der jeweiligen Antriebsvorrichtung 41 oder dem zumindest einen Antriebsteil derselben zusammenwirkt, in eine von zwei zueinander entgegen gesetzt gerichteten Längsrichtungen L45 der jeweiligen Antriebsvorrichtung 41 bewegt wird. Der Antriebsabschnitt kann ein Abschnitt der Unterseite 21b des Stellkörpers 20 sein, der der Antriebsvorrichtung 41 oder dem zumindest einen Antriebsteil derselben zugewandt liegt. In diesem Sinne kann der Stellkörper 20 die Kopplungsvorrichtung mit jeweils einem einer Antriebsvorrichtung 41 zugeordneten Kopplungsteil 35 aufweisen und kann jedes Kopplungsteil 35 einen Antriebsabschnitt aufweisen, der der jeweiligen Antriebsvorrichtung 41 oder dem zumindest einen Antriebsteil derselben zugewandt liegt.

Bei der Ausführungsform des Stellmotors 1 nach der Figur 1 ist der Antriebsabschnitt jedes Kopplungsteils 35 mit dem Bezugszeichen 35a versehen, dem eine Antriebsoberfläche 55 der jeweiligen Antriebsvorrichtung 41 zugewandt liegt, die an der Antriebsoberfläche 55 anliegt oder durch Aktivierung der jeweiligen Antriebsvorrichtung 41 in Anlage mit der Antriebsoberfläche 55 gebracht werden kann.

Dadurch, dass das Kopplungsteil 35 Teil des Stellkörpers 20 ist, wird durch Aktivierung der jeweiligen Antriebsvorrichtung 41 ein Antriebsabschnitt und somit ein jeweiliger äußerer Abschnitt oder Randabschnitt 26, 27, 28 des Stellkörpers 20 entsprechend des Bewegungskommandos in eine von zwei zueinander entgegen gesetzt gerichteten Umfangsrichtungen L23 bewegt. Dabei kann die zumindest eine Antriebsvorrichtung 41 derart ausgeführt sein, dass diese wahlweise eine Bewegung eines jeweiligen äußeren Abschnitts 26, 27, 28 des Stellkörpers 20 in die eine oder andere der zwei zueinander entgegen gesetzt gerichteten Richtungen L45 bzw. L23 bewirkt.

Jede der zumindest einen Antriebsvorrichtung 41 und eine jeweilige Kopplungsvorrichtung 31, 32, 33 des Stellkörpers 20 können in radialer Hinsicht übereinander gelegen sein, so dass die jeweilige Antriebsvorrichtung 41 mit der jeweiligen Kopplungsvorrichtung 31 zusammen wirken kann. Generell kann das Zusammenwirken der jeweiligen Antriebsvorrichtung 41 mit der jeweiligen Kopplungsvorrichtung 31 durch ein gegenseitiges Eingreifen von jeweils ineinander greifenden Oberflächenabschnitten oder ein Anliegen von jeweiligen Oberflächenabschnitten sein. Dabei kann das Antriebsteil insbesondere ein dem Kopplungsteil 35 zugewandter Abschnitt der Antriebsvorrichtung 41 sein, der sich aufgrund eines jeweiligen Stellkommandos gegenüber einem Basisteil derselben in der Längsrichtung L45 bewegen kann. Auch kann die jeweilige Antriebsvorrichtung 41 in sich beweglich sein, so dass sich die jeweilige Antriebsvorrichtung 41 aufgrund eines Stellkommandos verformt und dabei bei Aktivierung aufgrund eines Stellkommandos das Kopplungsteil 35 entlang der Längsrichtung L45 und somit der Umfangsrichtung L23 bewegt.

Bei der Ausführungsform der Figur 1 weist der Stellkörper 20 drei radial äußere Abschnitte 26, 27, 28 auf, die entlang des Umfangsrands 23 und an diesem herum verteilt gelegen sind. Entlang der Umfangsrichtung L23 gesehen können an dem Stellkörper 20 zwischen jeweils zwei äußeren Abschnitten 26, 27, 28 ein Zwischenabschnitt Z1, Z2, Z3 gelegen sein. Bei der Ausführungsform der Figur 1 ist ein erster Zwischenabschnitt Z1 zwischen den äußeren Abschnitten 26 und 27, ein zweiter Zwischenabschnitt Z2 zwischen den äußeren Abschnitten 27 und 28 und ein dritter Zwischenabschnitt Z3 zwischen den äußeren Abschnitten 28 und 26 gelegen. Bei der Ausführungsform des Stellmotors 1 nach der Figur 1 ist eine erste Antriebsvorrichtung 41 zwischen einem ersten Zwischenabschnitt Z1 und einem zweiten Zwischenabschnitt Z2, eine zweite Antriebsvorrichtung 42 zwischen einem zweiten Zwischenabschnitt Z2 und einem dritten Zwischenabschnitt Z3 und eine dritte Antriebsvorrichtung 43 zwischen einem dritten Zwischenabschnitt Z3 und dem ersten Zwischenabschnitt Z1 gelegen.

Die zumindest eine Antriebsvorrichtung der Antriebs-Anordnung 40 kann jeweils in verschiedener Weise ausgeführt sein. Eine Ausführungsform der Antriebsvorrichtungen 41, 42, 43 kann jeweils aus zumindest einem Aktuatorkörper 45 mit Betätigungselektroden gebildet sein. Der zumindest eine Aktuatorkörper 45 kann einen Aktuator-Grundkörper und an oder in diesem angeordnete Betätigungseiektroden aufweisen. Der jeweilige Aktuatorkörper 45 erstreckt sich von dem Basiskörper 10 aus in Richtung zum jeweiligen Kopplungsteil 35 hin, wobei ein erstes oder unteres Ende jedes Aktuatorkörpers 45 mit dem Basiskörper 10 in Verbindung steht oder auf diesem befestigt ist und ein zweites Ende jedes Aktuatorkörpers 45 an einer Führungsfläche des Kopplungsteil 35 gelegen ist. Der jeweilige Aktuatorkörper 45 ist derart ausgeführt, dass dieser bei Aktivierung desselben aufgrund eines Bewegungs- oder Stellkommandos zur Drehung des Stellkörpers 20 durch Ausdehnung und Zusammenziehen sowie Krümmung desselben das Kopplungsteil 35 fortbewegt. Der Aktuatorkörper oder der Aktuator-Grundkörper kann insbesondere aus einem piezoelektrischen oder elektrostriktiven Material gebildet sein oder besteht aus einem piezoelektrischen oder elektrostriktiven Material, um die Verformung des Aktuatorkörpers 45 zur Bewegung des Stellkörpers 20 entsprechend eines Bewegungskommandos in eine zwei zueinander entgegen gesetzt gerichteten Umfangsrichtungen L23 zu erreichen, Der Aktuatorkörper 45 wird mittels einer in den Figuren nicht dargestellten elektrischen Betätigungsvorrichtung aufgrund einer entsprechenden Bewegungs- oder Stellkommandierung elektrisch angesteuert, um dessen Verformungen auszuführen.

Nach der in der Figur 1 gezeigten Ausführungsform der Antriebsvorrichtungen 41, 42, 43 ist der Aktuatorkörper 45 jeweils aus vier über die jeweilige Längsrichtung L45 verteilten Aktuatorsäulen 51, 52, 53, 54 gebildet, von denen jedes mit einem ersten Ende 51a bzw. 52a bzw. 53a bzw. 54a jeweils an dem Basiskörper 10 befestigt ist. Entgegen gesetzt zu den ersten Enden 51a, 52a, 53a, 54a ist jeweils ein zweites Ende 51b bzw. 52b bzw. 53b bzw. 54b an einer als Antriebsabschnitt 35a des Kopplungsteils 35 gestalteten und dem Aktuatorkörper 45 bzw. den Aktuatorsäulen 51, 52, 53, 54 zugewandt gelegenen Oberfläche 35a des Kopplungsteils 35 gelegen. Dabei können die vier Aktuatorsäulen 51, 52, 53, 54 insbesondere über die jeweilige Längsrichtung L45 gleichmäßig verteilt sein. Auch können die vier Aktuatorsäulen 51, 52, 53, 54 in Bezug auf eine quer zur jeweiligen Längsrichtung L45 verlaufende Symmetrieachse paarweise symmetrisch angeordnet sein. Alternativ dazu kann die Antriebskomponente 50 aus nur zwei über die jeweilige Längsrichtung L45 verteilten Aktuatorsäulen gebildet sein, die in Bezug auf eine quer zur jeweiligen Längsrichtung L45 verlaufende Symmetrieachse zueinander symmetrisch angeordnet sein können.

Der Aktuatorkörper 45 kann jeweils aus weniger als vier über die jeweilige Längsrichtung L45 verteilten Aktuatorsäulen und z.B. nur einer Aktuatorsäule gebildet sein.

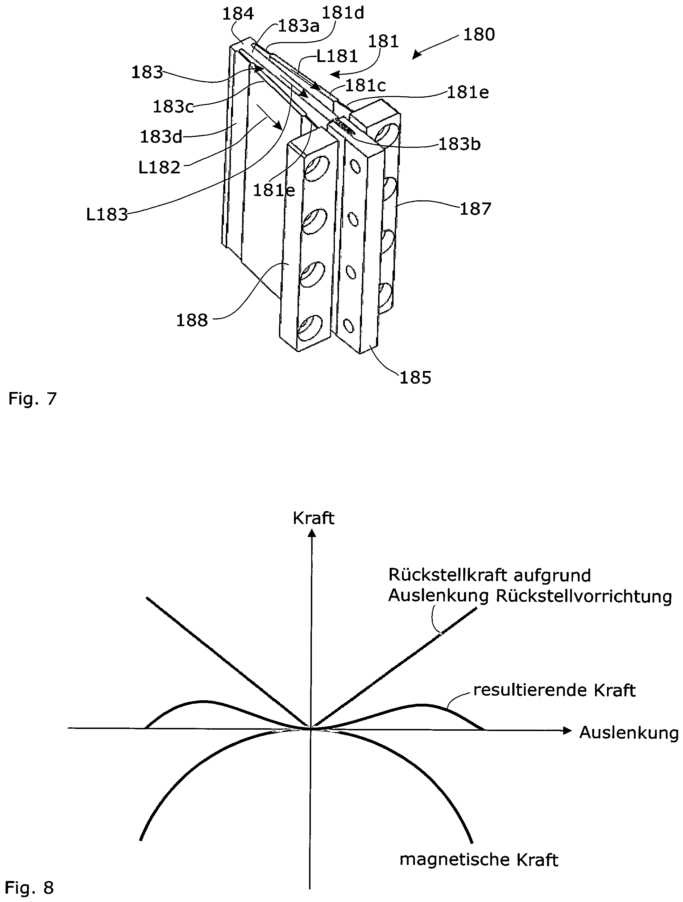

Der Stellmotor 1 kann eine Führungsvorrichtung 37 aufweisen, mit der die Bewegbarkeit des Kopplungsteils 35 in Z-Richtung, also in Richtung zum Stellkörper 20 hin, begrenzt wird. Bei der in der Figur 7 gezeigten Ausführungsform führt die Führungsvorrichtung 37 das Kopplungsteils 35 in dessen Längsrichtung L45 geführt, so dass die Führungsvorrichtung 37 als Linearführung gestaltet ist. Bei der in der Figur 7 gezeigten Ausführungsform weist der Stellmotor 1 eine optional vorgesehene Linearführungs-Vorrichtung 38 auf, die in einer am Basiskörper 10 befestigten Rahmenvorrichtung 39 ausgebildet ist.

Der zumindest eine Antriebsvorrichtung 41, 42, 43 kann auch in anderer Weise ausgeführt sein. Beispielsweise kann die zumindest eine Antriebsvorrichtung 41, 42, 43 durch einen Grundkörper ausgeführt sein, der zumindest ein an einem Grundkörper 45 angeordnetes Reibrad aufweist, das an einem jeweiligen äußeren Abschnitt an der Unterseite 21b des Stellkörpers 20 oder an der Oberfläche 35a des Kopplungsteils 35 anliegt und das bei entsprechender Ansteuerung angetrieben wird, um eine kommandierte Fortbewegung des jeweiligen Randabschnitts 26, 27, 28 in eine Umfangsrichtung L23 zu erreichen. Bei dieser Ausführungsform kann bei einer entsprechenden Ausrichtung des zumindest einen Reibrad der zumindest eine Antriebsvorrichtung 41 als Linearantrieb ausgeführt sein.

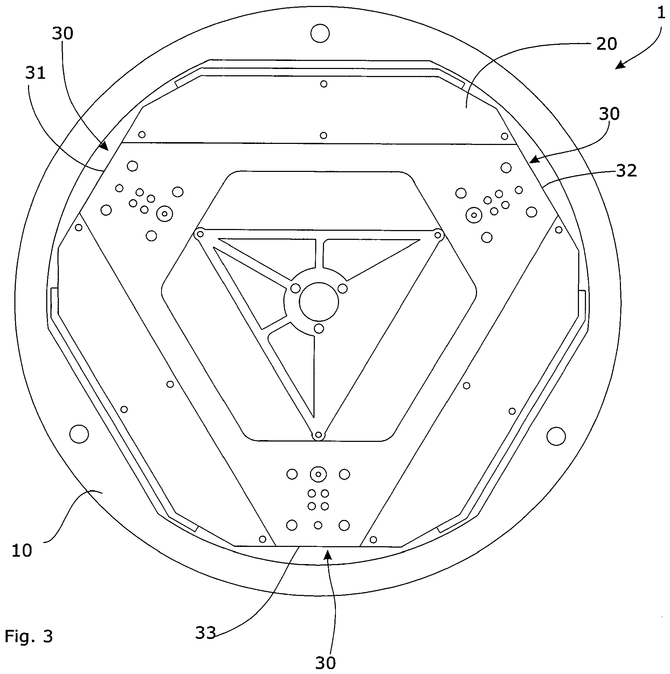

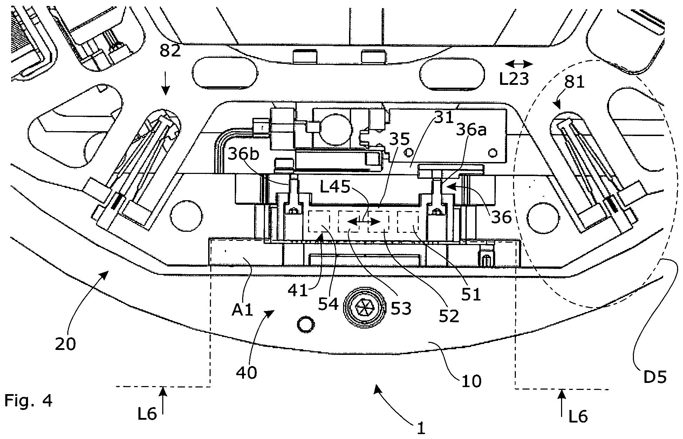

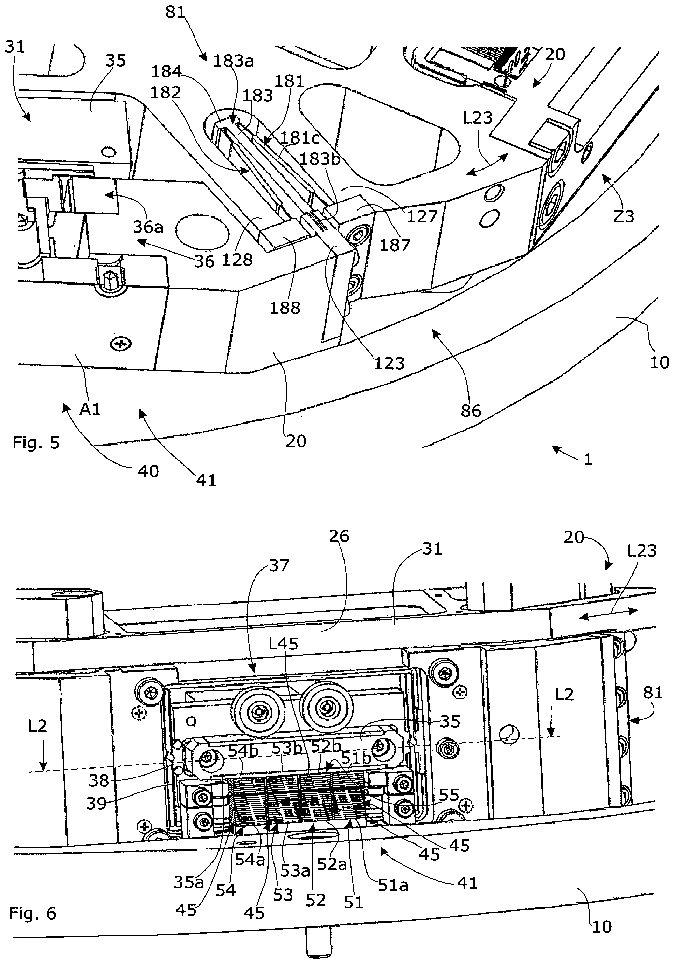

Nach der Erfindung weist der erfindungsgemäße Stellmotor 1 eine Rückstell-Anordnung 80 auf, die den Stellkörper 20 und den Basisköper 10 koppelt und zwischen diesen eine Rückstellkraft ausübt, die einer von der Antriebs-Anordnung 40 bewirkten Stellbewegung entlang der Umfangsrichtung L23 und somit Relativbewegung zwischen dem Stellkörper 20 und dem Basiskörper 10 entgegen wirkt. Die Rückstell-Anordnung 80 kann als zumindest ein Paar von Federvorrichtungen ausgeführt sein. Bei der Ausführungsform des Stellmotors 1 nach den Figuren 2 bis 7 ist quer zur Längsrichtung L45 des Aktuatorkörpers 45 und somit quer zur Betätigungsrichtung der zumindest einen Aktuatorvorrichtung 41 gesehen an entgegen gesetzt zueinander gelegenen Seiten jeweils eine Rückstell-Vorrichtung 81 bzw. 82 angeordnet. Jede der Rückstell-Vorrichtungen 81 bzw. 82 koppelt den Stellkörper 20 und den Basisköper 10 derart, dass bei einem Auseinanderbewegen von Stellkörper 20 und Basisköper 10 auf einer in der Umfangsrichtung L23 gesehenen Seite der jeweiligen Aktuatorvorrichtung 41 angeordnete Rückstell-Vorrichtung 81 bzw. 82 eine Kraft ausübt, die das Auseinanderbewegen rückzustellen versucht. Das zumindest eine Paar von Federvorrichtungen kann derart angeordnet und ausgeführt sein, dass die Drehführung 50 durch die Rückstell-Anordnung 80 gebildet ist und der Stellkörper 20 um einen Drehpunkt M drehbar an dem Basiskörper 10 angeordnet ist.

Bei der Ausführungsform des Stellmotors 1 nach den Figuren 2 bis 7 weist die Antriebs-Anordnung 40 drei Antriebsvorrichtungen 41, 42, 43 auf. Weiterhin sind bei dieser Ausführungsform quer zur Betätigungsrichtung der jeweiligen Aktuatorvorrichtung 41, 42, 43 gesehen an entgegen gesetzt zueinander gelegenen Seiten jeweils eine Rückstell-Vorrichtung 81, 82 angeordnet. Dabei koppelt jede der Rückstell-Vorrichtungen 81, 82 den Stellkörper 20 und den Basisköper 10 derart, dass, in Bezug auf die Umfangsrichtung L23, bei einem Auseinanderbewegen von Stellkörper 20 und Basisköper 10 auf einer Seite der jeweiligen Aktuatorvorrichtung 41, 42, 43 die dort angeordnete Rückstell-Vorrichtungen 81, 82 eine Kraft ausübt, die das Auseinanderbewegen rückzustellen versucht.

Jede Rückstell-Vorrichtung 81 bzw. 82 ist nach der Ausführungsform des Stellmotors 1 nach den Figuren 2 bis 7 als Schenkelfeder-Anordnung 180 ausgeführt, die zwei seitliche Federteile 181, 182 und einen mittleren plattenförmigen Stützabschnitt 183 mit einer leistenförmigen Befestigungsbasis 184 aufweist. Der mittlere plattenförmige Stützabschnitt 183 ist zwischen den seitlichen Federteilen 181, 182 gelegen und kann eine leistenförmige Befestigungsbasis 184 aufweisen, die ein erstes Ende 183a des mittleren Stützabschnitts 183 bildet und von der die seitlichen Federteile 181, 182 ausgehen. Ein entgegen gesetzt zu dem erste Ende 183a gelegenes zweites Ende 183b des mittleren Stützabschnitts 183 ist an dem Stellkörper 20 oder einer an dem an dem Stellkörper 20 befestigten Befestigungsvorrichtung 121 fixiert. Die seitlichen Federteile 181, 182 können ausgehend von der Befestigungsbasis 184 derart verlaufen, dass deren Längsrichtung L181 bzw. L182 in einem Winkel größer Null Grad zu der Längsrichtung L183 des mittleren Stützabschnitts 183 verlaufen, so dass sich der Abstand zwischen dem mittleren Stützabschnitt 183 und jedem der seitlichen Federteile 181 bzw. 182 vom ersten Ende 183a zum zweiten Ende 183b hin vergrößert, um den insgesamt verfügbaren Federweg zu vergrößern. Dieser Winkel beträgt vorzugsweise zwischen 0 Grad und 45 Grad. Der Querschnitt jedes der seitlichen Federteile 181 bzw. 182 kann in einem in Bezug auf dessen Längsrichtung L181 bzw. L182 mittleren Abschnitt 181c bzw. 181'2c gegenüber seitlich derselben gelegenen Endabschnitten 181d, 181d bzw. 183d, 183e vergrößert sein. Die seitlichen Federteile 181, 182 weisen ein erstes Ende 181a bzw. 182a auf, mit denen die Federteile 181, 182 an der Befestigungsbasis 18 befestigt sein. Ein zweites Ende 181b bzw. 182b seitlichen Federteile 181, 182, das in Bezug auf die Längsrichtung L181 bzw. L182 entgegen gesetzt zu dem jeweils ersten Ende 181a bzw. 182a gelegen ist, ist jeweils mit einer Befestigungsleiste 187 bzw. 188 verbunden, die an einer entsprechenden Aufnahmevorrichtung 127 bzw. 128 des Stellkörpers 20 ausgebildet ist.

Die Schenkelfeder-Anordnung 180 kann aus einem Stück hergestellt sein, um die Dauerfestigkeit und Zuverlässigkeit derselben zu erhöhen.

Nach der Erfindung weist der erfindungsgemäße Stellmotor 1 eine Magnet-Kompensationsvorrichtung 90 auf, die die von der Rückstell-Vorrichtung 80 ausgeübte Rückstellkraft kompensiert, also die Rückstellkraft entweder vollkommen aufhebt oder diese reduziert.

Bei der Ausführungsform des Stellmotors 1 nach den Figuren 2 bis 7 ist quer zur Längsrichtung L45 gesehen an entgegen gesetzt zueinander gelegenen Seiten jeweils eine Magnet-Kompensationsvorrichtung 90 aus jeweils zwei sich magnetisch anziehenden Magnet-Teilen 91, 92 bzw. 93,94 angeordnet. Von den jeweiligen beiden Magnet-Teilen 91, 92 bzw. 93, 94 ist ein jeweils erstes Magnet-Teil 91 bzw. 93 an dem Basiskörper 10 befestigt und ein jeweils zweites Magnet-Teil 91 bzw. 93 an dem Stellkörper 20 befestigt. Die Magnet-Teile jeweils eines der zwei Paare von Magnet-Teilen ziehen sich magnetisch auf eine Weise an, dass die von der jeweils zugeordneten Rückstell-Anordnung 80 ausgeübte Rückstellkraft, die bei einer Bewegung des Kopplungsteils 35 erzeugt wird, entweder vollkommen aufgehoben oder aber deutlich reduziert wird. Von den zwei sich magnetisch anziehenden Magnet-Teilen 91, 92 bzw. 93, 94 kann jeweils ein Magnet-Teil ein Permanentmagnet und das jeweils andere Magnet-Teil aus einem magnetischen Material gebildet sein. Auch können beide Magnet-Teile jeweils eines Paares von Magnet-Teilen Permanentmagneten sein, wenn diese derart angeordnet sein, dass diese sich anziehen.

Die Figur 8 zeigt eine Darstellung des Zusammenwirkens der Kräfte einer Rückstellvorrichtung und einer dieser zugeordneten Magnet-Kompensationsvorrichtung. Der Kraftverlauf der durch die Rückstellvorrichtung bewirkten Rückstellkraft ist durch "Rückstellkraft aufgrund Auslenkung der Rückstellvorrichtung" bezeichnet. Weiterhin ist der Kraftverlauf der durch die Magnet-Kompensationsvorrichtung bewirkten Kompensationskraft durch "magnetische Kraft" bezeichnet. Durch Addition dieser Kräfte ergibt sich die "resultierende Kraft".

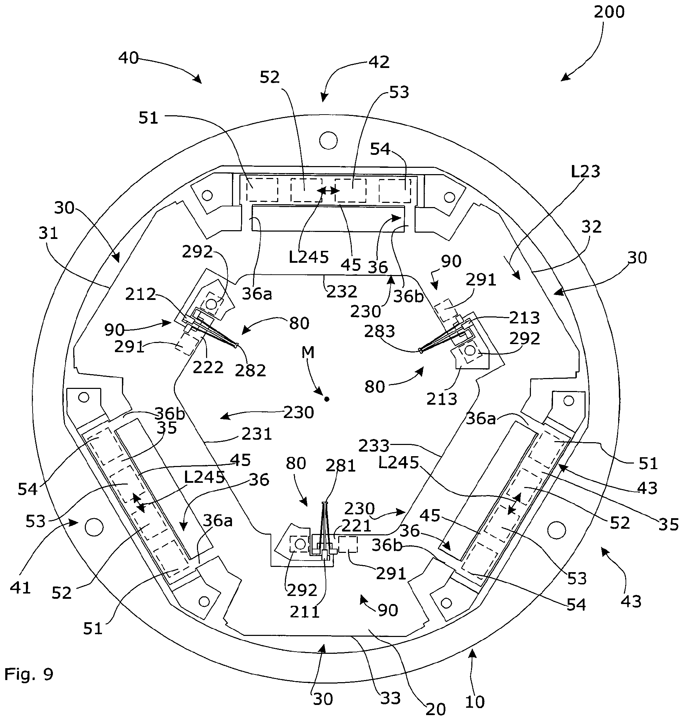

Ein Beispiel dieser Kompensation für jeweils eine Rückstell-Vorrichtung 81 oder 82 und eine dieser zugeordneten Magnet-Kompensationsvorrichtung 90 mit Magnet-Teilen 91, 92 bzw. 93, 94 ist in der Figur 9 gezeigt. Durch diesen Kompensationseffekt wird die Antriebsenergie, die von der zumindest einen Antriebsvorrichtung 41, 42, 43 gefordert ist, um die Gesamtfunktion des Stellmotors 1 zu erreichen, deutlich reduziert.

Die Rückstell-Anordnung 80 kann auch an einem radial innen liegenden Abschnitt des Stellkörpers 20 angeordnet sein. Die Rückstell-Anordnung 80 kann generell eine einzige Rückstell-Vorrichtung sein. Da diese nicht allein den Stellkörper 20 zentrieren kann, kann in diesem Fall vorgesehen sein, dass der Stellkörpers 20 zur Ausbildung des Drehpunkts M über eine Drehlagerung auf dem Basiskörper 10 gelagert ist. Dabei können mehrere Rückstell-Vorrichtungen über den Umfang des Stellkörpers 20 verteilt und insbesondere gleichmäßig über den Umfang des Stellkörpers 20 verteilt angeordnet sein. Dadurch kann die Drehführung 50 durch die Rückstell-Anordnung 80 gebildet sein.

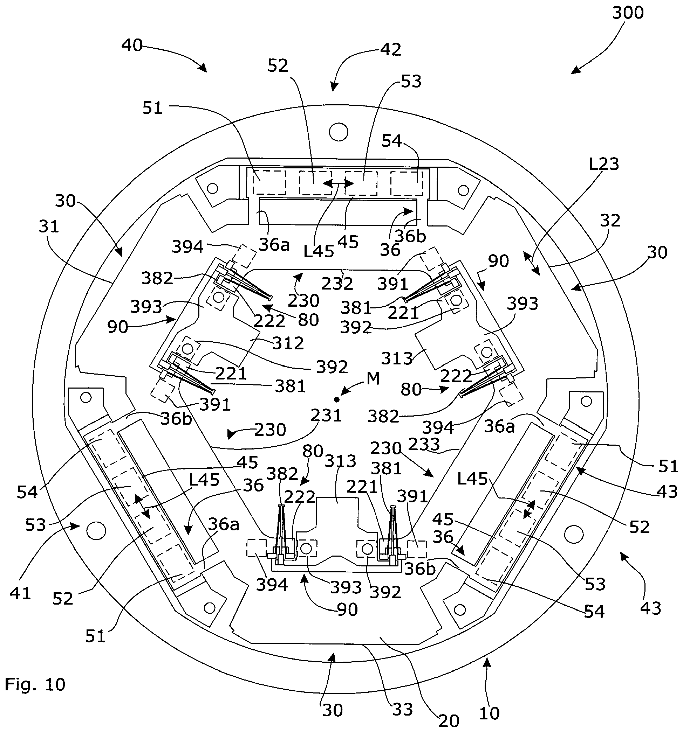

Die Ausführungsform der Figur 10 zeigt einen Stellmotor 200, der eine erfindungsgemäße Alternative zu der Ausführungsform des Stellmotors nach der Figur 1 ist. Dabei ist die Rückstell-Anordnung 80 an einem radial innen liegenden Abschnitt 230 des Stellkörpers 20 angeordnet. Bei der Ausführungsform der Figur 10 sind drei Rückstell-Vorrichtungen 281, 282, 283 gleichmäßig über den Umfang des Stellkörpers 20 verteilt angeordnet und bilden die Drehführung 50. Zwischen jeweils zwei Rückstell-Vorrichtungen 281, 282, 283 ist jeweils ein radial innerer Randabschnitt 231, 232, 233 des Stellkörpers 20 angeordnet. Jede Rückstell-Vorrichtung 281, 282, 283 ist jeweils zwischen einem Anlageabschnitt 211, 212, 213 des Basiskörpers 10 und einem Anlageabschnitt 221, 222, 223 angeordnet, um diese jeweils zu einem Ausgangsabstand zurückzustellen, wenn die Antriebs-Anordnung 40 den Stellkörper 20 relativ zum Basiskörper 10 aus dem Ausgangszustand in der Längsrichtung 245 der jeweiligen Antriebsvorrichtung 41, 42, 43 in einen Verstellzustand bewegt.

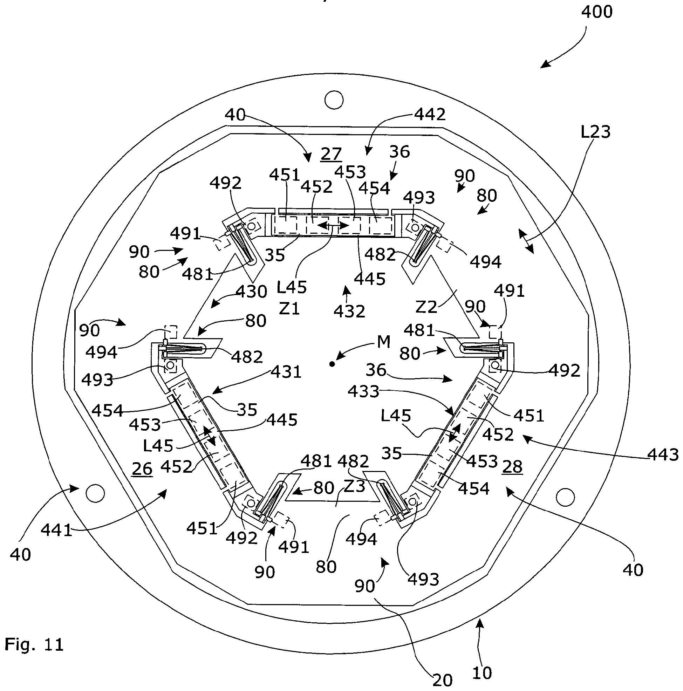

Bei der Ausführungsform des Stellmotors 300 der Figur 11 ist die Rückstell-Anordnung 80 an einem radial innen liegenden Abschnitt 230 des Stellkörpers 20 angeordnet. Die Rückstell-Anordnung 80 ist aus drei Paaren von Rückstell-Vorrichtungen 381, 382 gebildet, die gleichmäßig über den Umfang des Stellkörpers 20 verteilt angeordnet sind und die Drehführung 50 bilden. Jedes Paar von Rückstell-Vorrichtungen 381, 382 ist jeweils einerseits an einem Anlageabschnitt 211 bzw. 212 bzw. 213 des Basiskörpers 10 und andererseits an zumindest einem Anlageabschnitt des Stellkörpers 20 angeordnet. Die Rückstell-Vorrichtungen 381, 382 eines Paares von Rückstell-Vorrichtungen sind dabei an Anlageabschnitt 221 bzw. 222 des Stellkörpers 20 befestigt, die auf zueinander entgegen gesetzt gelegenen Seiten des jeweiligen Anlageabschnitts 211, 212, 213 des Basiskörpers 10 gelegen sind, so dass die Rückstellung in zwei zueinander entgegen gesetzten Richtungen L45 erfolgen kann.

Bei der Ausführungsform des erfindungsgemäßen Stellmotors 400 nach der Figur 11 sind die Antriebs-Anordnung 40 mit drei Antriebsvorrichtungen 441, 442, 443, die Rückstell-Anordnung 80 und die Magnet-Kompensationsvorrichtung 90 an einem radial innen liegenden Abschnitt 430 des Stellkörpers 20 angeordnet. Dabei ist die Antriebsvorrichtung 441 an dem radial innen liegenden Abschnitt 431, die Antriebsvorrichtung 442 an dem radial innen liegenden Abschnitt 432 und die Antriebsvorrichtung 443 an dem radial innen liegenden Abschnitt 433 des Stellkörpers 20 angeordnet. Die Antriebsvorrichtungen 441, 442, 443 sind wie die Antriebsvorrichtungen der Ausführungsform der Figur 2 ausgeführt und sind jeweils aus vier über die jeweilige Längsrichtung L45 verteilten Aktuatorsäulen 451, 452, 453, 454 gebildet, die mit einem Kopplungsteil 35 des Stellkörpers 20 zusammenwirken.

Die Rückstell-Anordnung 80 ist aus drei Paaren von Rückstell-Vorrichtungen 481, 448 gebildet, die über den Umfang 23 verteilt angeordnet sind, so dass die Drehführung 50 durch die Rückstell-Anordnung 80 gebildet ist. Jede Rückstell-Vorrichtung 481, 482 ist als Schenkelfeder-Anordnung gemäß der Figur 7 ausgeführt. Weiterhin sind bei dieser Ausführungsform quer zur Betätigungsrichtung der jeweiligen Aktuatorvorrichtung 441, 442, 443 gesehen an entgegen gesetzt zueinander gelegenen Seiten jeweils eine Rückstell-Vorrichtung 481, 482 angeordnet. Jede der Rückstell-Vorrichtungen 81, 82 koppelt den Stellkörper 20 und den Basisköper 10 derart, dass, in Bezug auf die Umfangsrichtung L23, ein Auseinanderbewegen von Stellkörper 20 und Basisköper 10 auf einer Seite der jeweiligen Aktuatorvorrichtung 441, 442, 443 die dort angeordnete Rückstell-Vorrichtungen 481, 482 eine Kraft ausübt, die das Auseinanderbewegen rückzustellen versucht. Quer zur Längsrichtung L45 gesehen an entgegen gesetzt zueinander gelegenen Seiten der jeweiligen Aktuatorvorrichtung 441, 442, 443 ist jeweils eine Magnet-Kompensationsvorrichtung 90 aus jeweils zwei sich magnetisch anziehenden Magnet-Teilen 491, 492 bzw. 493,494 angeordnet. Von den jeweiligen beiden Magnet-Teilen 491, 492 bzw. 493,494 ist ein jeweils erstes Magnet-Teil 491 bzw. 493 an dem Basiskörper 10 befestigt und ein jeweils zweites Magnet-Teil 491 bzw. 493 an dem Stellkörper 20 befestigt.

Die Funktionsweise ist analog der Funktionsweise des Stellmotors 1 nach der Figur 2.

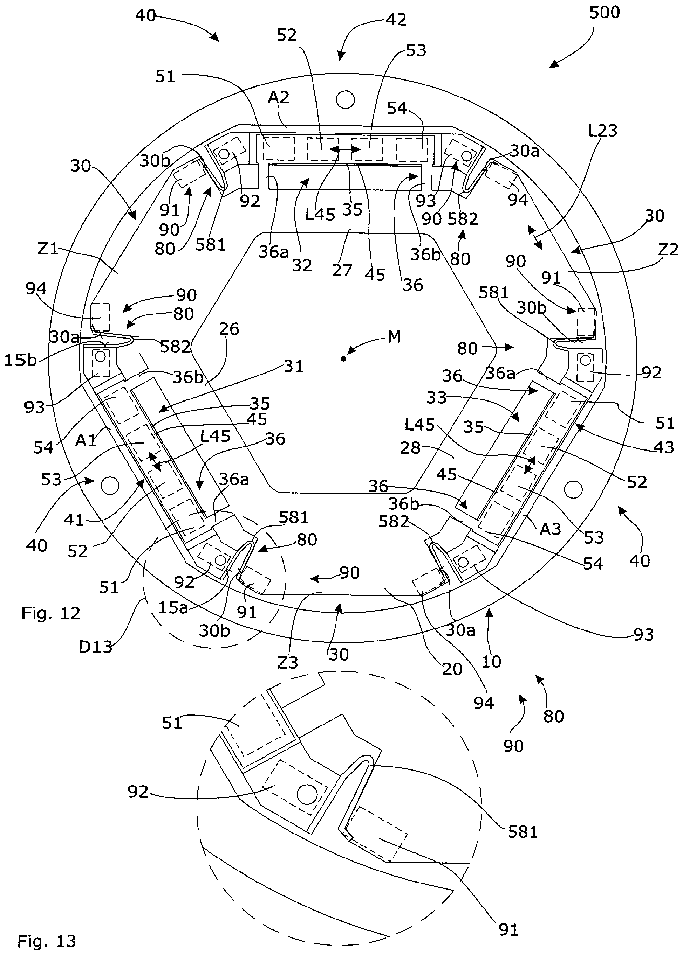

In den Figuren 12 und 13 ist eine Ausführungsform des erfindungsgemäßen Stellmotors 500 dargestellt, die sich von der Ausführungsform der Figur 2 durch die Bauart der Rückstell-Vorrichtungen 581, 582, die jeweils als reine Schenkelfedern ausgebildet sind. Jeder der Rückstell-Vorrichtungen 581, 582 ist zwischen Anlageflächen 15a, 30b bzw. 15b, 30a des Basiskörpers 10 oder des Stellkörpers 20 gelegen. Dabei gehören die Anlageflächen 15a, 15b zum Basiskörper 10 und die Anlageflächen 30a, 30b zum Stellkörper 20.

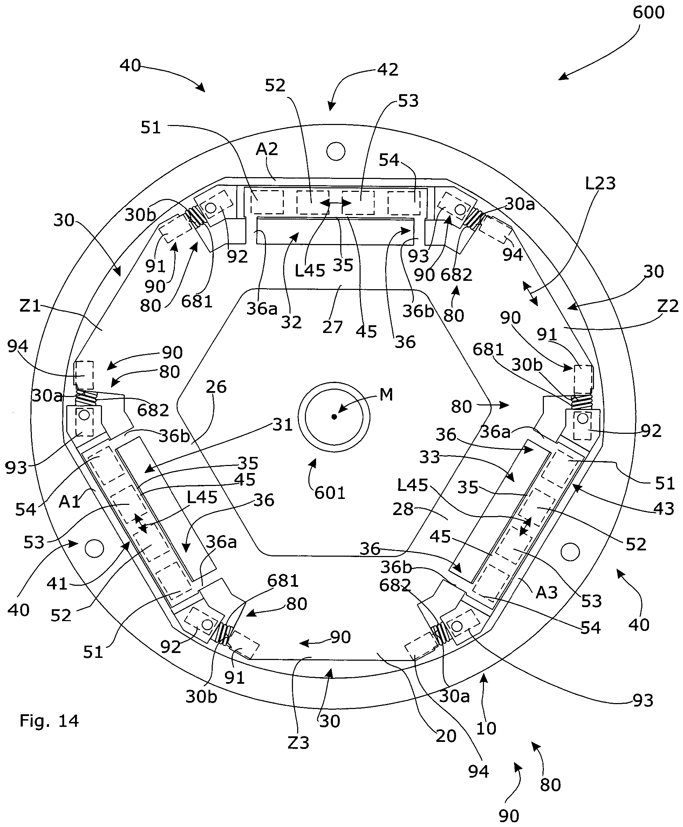

Die Ausführungsform des erfindungsgemäßen Stellmotors 600 der Figur 14 unterscheidet sich von der Ausführungsform der Figur 2 durch die Bauart der Rückstell-Vorrichtungen 681, 682, die jeweils als reine Spiralfedern ausgebildet sind. Jeder der Rückstell-Vorrichtungen 681, 682 ist zwischen Anlageflächen 15a, 30b bzw. 15b, 30a des Basiskörpers 10 oder des Stellkörpers 20 gelegen. Der Stellkörper 20 ist mittels einer Drehlagerung 601 auf dem Basiskörper 10 gelagert.

## Patentansprüche

1. Stellmotor (1), aufweisend:
- einen Basiskörper (10),
- einen an dem Basisköper (10) angeordneten Stellkörper (20),
- eine Antriebs-Anordnung (40) mit zumindest einer Antriebsvorrichtung (41), die mit einem Antriebsabschnitt des Stellkörpers (20) gekoppelt ist und aufgrund dieser Kopplung bei Aktivierung der Antriebs-Anordnung (40) eine Bewegung des Antriebsabschnitts des Stellkörpers (20) in einer von zwei zueinander entgegen gesetzt gerichteten Umfangsrichtungen bewirkt,
- eine Drehführung (50), mit der der Stellkörper (20) drehbar an dem Basisköper (10) geführt ist und durch die die Bewegung des Antriebsabschnitts des Stellkörpers (20) in eine Drehbewegung des Stellkörpers (20) umgesetzt wird,
- eine Rückstell-Anordnung (80), die den Stellkörper (20) und den Basisköper (10) miteinander koppelt und zwischen diesen eine Rückstellkraft ausübt, die der Stellbewegung des Stellkörpers (20) entgegen wirkt,
**gekennzeichnet durch**
- eine Magnet-Kompensationsvorrichtung (90), die die von der Rückstell-Anordnung (80) ausgeübte Rückstellkraft reduziert oder aufhebt.

2. Stellmotor (1) nach dem Anspruch 1, wobei die Drehführung (50) durch die Rückstell-Anordnung (80) gebildet ist.

3. Stellmotor (1) nach dem Anspruch 1 oder 2, wobei die Rückstell-Anordnung (80) aus zwei Rückstell-Vorrichtungen (81 bzw. 82) gebildet ist, wobei jeweils eine Rückstell-Vorrichtung (81 bzw. 82) an den in einer Umfangsrichtung (L23) des Stellkörpers (20) entgegen gesetzt zueinander gelegenen Seiten einer Antriebsvorrichtung (41) gelegen sind.

4. Stellmotor (1) nach einem der voranstehenden Ansprüche, wobei die Rückstell-Vorrichtungen (81, 82) als Schenkelfeder-Anordnung (180) ausgeführt sind, die zwei seitliche Federteile (181, 182) und einen sich zwischen diesen erstreckenden mittleren Stützabschnitt (183) mit einer leistenförmigen Befestigungsbasis (184) aufweisen, von dem die seitlichen Federteile (181, 182) und der mittlere Stützabschnitt (183) jeweils mit einem ersten Ende ausgehen, und wobei ein jeweils zweites Ende des mittleren Stützabschnitts (183) mit dem Basiskörper (10) und die beiden seitlichen Federteile (181, 182) mit in einer Umfangsrichtung (L23) des Stellkörpers (20) seitlich des mittleren Stützabschnitts (183) gelegenen Verbindungsvorrichtungen des Stellkörpers (20) befestigt sind.

5. Stellmotor (1) nach einem der voranstehenden Ansprüche, wobei die zumindest eine Antriebsvorrichtung (41) aus einem Aktuatorkörper (45) aus einem piezoelektrischen oder elektrostriktiven Material mit Betätigungselektroden gebildet ist.

6. Stellmotor (1) nach dem Anspruch 5, wobei die zumindest eine Antriebsvorrichtung (41) durch einen Schreitantrieb gebildet ist.

7. Stellmotor (1) nach dem Anspruch 5, wobei die zumindest eine Antriebsvorrichtung (41) durch einen Ultraschallantrieb gebildet ist.

8. Stellmotor (1) nach einem der voranstehenden Ansprüche, wobei an dem zumindest einen Antriebsabschnitt eine Linearführung angeordnet ist, mit der die an dem jeweiligen Antriebsabschnitt gelegene Antriebsvorrichtung (41) den Antriebsabschnitt linear bewegt.

9. Stellmotor (1) nach einem der voranstehenden Ansprüche, wobei Magnet-Kompensationsvorrichtung (90) zumindest einen Permanentmagneten aufweist.

10. Stellmotor (1) nach einem der voranstehenden Ansprüche,
wobei die Antriebs-Anordnung (40) drei Antriebsvorrichtungen (41) aufweist,
wobei quer zur Betätigungsrichtung der Aktuatorvorrichtung (41) gesehen an entgegen gesetzt zueinander gelegenen Seiten jeweils eine Rückstell-Vorrichtung (81, 82) angeordnet ist, wobei jede der Rückstell-Vorrichtungen (81, 82) den Stellkörper (20) und den Basisköper (10) derart koppelt, dass, in Bezug auf die Umfangsrichtung (L23), bei Auseinanderbewegen von Stellkörper (20) und Basisköper (10) auf einer Seite der jeweiligen Aktuatorvorrichtung (41) die dort angeordneten Rückstell-Vorrichtungen (81, 82) eine Kraft ausüben, die das Auseinanderbewegen rückzustellen versucht.

## Claims

1. Servomotor (1), comprising:
- a base body (10),
- an operating body (20) which is disposed at the base body (10),
- a drive arrangement (40) with at least one drive device (41) which is coupled to a drive section of the operating body (20) and which due to this coupling upon activation of the drive arrangement (40) effects a movement of the drive section of the operating body (20) in one of two directions which are directed opposed to each other,
- a rotation guide (50), with which the operating body (20) is rotatably guided on the base body (10) and through which the movement of the drive section of the operating body (20) into a rotational movement of the operating body (20) is implemented,
- a return assembly (80) which couples the operating body (20) and the base body (10) to each other and exerts a restoring force between them, which counteracts the operating movement of the operating body (20),
**characterized by** a magnet compensation device (90) which reduces or eliminates the restoring force exerted by the return assembly (80).

2. Servomotor (1) according to claim 1, wherein the rotation guide (50) is formed by the return assembly (80).

3. Servomotor (1) according to claim 1 or 2, wherein the return assembly (80) is formed from two return assemblies (81 or 82), wherein respectively one restoring device (81 or 82) is situated on sides of a drive device (41) which are opposed to each other when viewed in a circumferential direction (L23) of the operating body (20).

4. Servomotor (1) according to one of the preceding claims, wherein the return assemblies (81, 82) are designed as a leg spring arrangement (180), which comprise two lateral spring parts (181, 182) and a central support section (183) extending therebetween (180) and comprising a strip-shaped mounting base (184) from which the lateral spring parts (181, 182) and the central support section (183) each start with a first end, and wherein in each case a second end of the central support section (183) are mounted to the base body (10) and the two lateral spring parts (181, 182) are attached to connecting devices of the operating body (20) which are lying laterally of the central support section (183) when viewed in a circumferential direction (L23) of the operating body (20).

5. Servomotor (1) according to one of the preceding claims, wherein at least one drive device (41) is formed from an actuator body (45) made of a piezoelectric or electrostrictive material with actuation electrodes.

6. Servomotor (1) according to claim 5, wherein the at least one drive device (41) is formed by a walk drive.

7. Servomotor (1) according to claim 5, wherein the at least one drive device (41) is formed by an ultrasonic drive.

8. Servomotor (1) according to one of the preceding claims, wherein at the at least one drive section a linear guide is arranged, by which the drive section (41) located on the respective drive section moves the drive section linearly.

9. Servomotor (1) according to one of the preceding claims, wherein the magnet compensation device (90) comprises at least one permanent magnet.

10. Servomotor (1) according to one of the preceding claims,
wherein the drive arrangement (40) comprises three drive devices (41),
wherein in each case a restoring device (81, 82) is arranged on opposite sides as viewed transversely to the actuation direction of the actuator device (41), wherein each of the restoring devices (81, 82) couples the operating body (20) and the base body (10) such that, with respect to the circumferential direction (L23), when the operating body (20) and base body (10) move apart, on one side of the respective actuator device (41), the restoring devices (81, 81, 82) exert a force which tries to reset the moving apart.

## Revendications

1. Servomoteur (1), comprenant:
- un corps de base (10),
- un corps de réglage (20) arrangé au corps de base (10),
- un arrangement d'entraînement (40) avec au moins un dispositif d'entraînement (41), qui est couplé avec une section d'entraînement du corps de réglage (20) et qui, en raison de cet accouplement, lors de l'activation de l'arrangement d'entraînement (40) crée un mouvement de la section d'entraînement du corps de réglage (20) dans un de deux sens circonférentiels opposés,
- un guidage de rotation (50), par lequel le corps de réglage (20) est guidé de manière rotative au corps de base (10) et par lequel le mouvement de la section d'entraînement du corps de réglage (20) est converti en un mouvement rotatif du corps de réglage (20),
- un arrangement de rappel (80), qui accouple le corps de réglage (20) et le corps de base (10) et exerce une force de rappel entre ceux-ci qui est opposée au mouvement de réglage du corps de réglage (20),
**caractérisé par** un dispositif de compensation magnétique (90), qui réduit ou annule la force de rappel exercée par l'arrangement de rappel (80).

2. Servomoteur (1) selon la revendication 1, où le guidage de rotation (50) est formé par l'arrangement de rappel (80).

3. Servomoteur (1) selon la revendication 1 ou 2, où l'arrangement de rappel (80) est formé par deux dispositifs de rappel (81 ou 82), où respectivement un dispositif de rappel (81 ou 82) est localisé aux côtés d'un dispositif d'entraînement (41) mutuellement opposés dans un sens circonférentiel (L23) du corps de réglage (20).

4. Servomoteur (1) selon une des revendications précédentes, où les dispositifs de rappel (81, 82) sont adaptés sous forme d'un arrangement de ressort à branches (180) comprenant deux parties de ressort latérales (181, 182) et une partie de support centrale (183) s'étendant entre ces deux parties, avec une base de fixation (184) sous forme de barre, de laquelle les parties de ressort latérales (181, 182) et la partie de support centrale (183) s'étendent respectivement avec une première extrémité, et où une deuxième extrémité respective de la partie de support centrale (183) est attachée au corps de base (10) et où les deux parties de ressort latérales (181, 182) sont attachées à des dispositifs de connexion du corps de réglage (20) situés latéralement de la partie de support centrale (183) dans un sens circonférentiel (L23) du corps de réglage (20).

5. Servomoteur (1) selon une des revendications précédentes, où ledit au moins un dispositif d'entraînement (41) est formé d'un corps d'actionneur (45) fait d'un matériau piézoélectrique ou électrostrictif avec des électrodes d'actionnement.

6. Servomoteur (1) selon la revendication 5, où ledit au moins un dispositif d'entraînement (41) est formé par un entraînement de marche.

7. Servomoteur (1) selon la revendication 5, où ledit au moins un dispositif d'entraînement (41) est formé par un entraînement à ultrasons.

8. Servomoteur (1) selon une des revendications précédentes, où un guidage linéaire est arrangé à ladite au moins une section d'entraînement, par lequel le dispositif d'entraînement (41) situé à la section d'entraînement respective déplace la section d'entraînement de manière linéaire.

9. Servomoteur (1) selon une des revendications précédentes, où ledit dispositif de compensation magnétique (90) comprend au moins un aimant permanent.

10. Servomoteur (1) selon une des revendications précédentes,
où l'arrangement d'entraînement (40) comprend trois dispositifs d'entraînement (41),
où un dispositif de rappel (81, 82) respectif est arrangé à des côtés mutuellement opposés, vu transversalement au sens d'actionnement du dispositif d'actionneur (41) respectif, chacun des dispositifs de rappel (81, 82) couplant le corps de réglage (20) et le corps de base (10) de sorte qu'en relation au sens circonférentiel (L23), lors du mouvement écartant le corps de réglage (20) du corps de base (10), sur un côté du dispositif d'actionneur (41), les dispositifs de rappel (81, 82) qui y sont situés, exercent une force qui tente de rappeler le mouvement d'écartement.
